# EUROPÄISCHE PATENTSCHRIFT

(11) **EP 0 587 039 B1**
(45) Veröffentlichungstag und Bekanntmachung des Hinweises auf die Patenterteilung: **24.01.1996**
(21) Anmeldenummer: 93113999.2
(22) Anmeldetag: 01.09.1993
(51) Int. Cl.: H01J 9/50

(54) **Verfahren zur Wiederaufbereitung von Bildröhren**
Method for salvaging cathode ray tubes
Procédé de récupération de tubes à rayons cathodiques

(30) Priorität: 10.09.1992 EP 92115511
(43) Veröffentlichungstag der Anmeldung: 16.03.1994
(73) Patentinhaber: HETZEL & CO. ELEKTRONIK-RECYCLING GmbH, D-90441 Nürnberg (DE)
(72) Erfinder: Wolf, Jürgen, Dipl.-Ing., D-90547 Stein (DE)
(74) Vertreter: TER MEER - MÜLLER - STEINMEISTER & PARTNER

(56) Entgegenhaltungen:
- DE-A- 3 726 795
- US-A- 4 176 891
- PATENT ABSTRACTS OF JAPAN vol. 9, no. 123 (E-317)(1846) 28. Mai 1985 & JP-A-60 010 545 (TOSHIBA) 19. Januar 1985
- PATENT ABSTRACTS OF JAPAN vol. 9, no. 123 (E-317)(1846) 28. Mai 1985 & JP-A-60 010 545

## Beschreibung

Gegenstand der Erfindung ist ein Verfahren zur Wiederaufarbeitung oder Recyclisieren von Bildröhren von Fernsehgeräten oder Computerterminals und insbesondere ein Verfahren zur schonenden Wiederaufbereitung von Bildröhren, welche das getrennte Wiederverwerten der Glasmaterlalien von Hals, Trichter und Schirm ermöglicht.

Mit der von der Bundesregierung geplanten Verordnung über die Vermeidung, Verringerung und Verwertung von Abfällen gebrauchter elektrischer und elektronischer Geräte (Elektronik-Schrott-Verordnung) ist die Wiederaufarbeitung und Verwertung von Bildröhren von Fernsehgeräten und Computern auf verschiedene Weise angegangen worden. Gewichtsmäßig den größten Anteil bilden dabei die Bildröhren, die meistens aus unterschiedlichen Glassorten hergestellt werden, da nur kleinere Bildröhren gelegentlich aus nur einem Stück hergestellt werden, das heißt ohne eine Verbindungsstelle zwischen Schirm und Trichter. Die Mehrzahl solcher Bildröhren, das heißt Kathodenstrahlbildröhren, besteht aus drei Teilen, nämlich dem Schirm, der bei der bestimmungsgemäßen Verwendung dem Betrachter zugewandt ist, dem mit dem Schirm verbundenen Trichter und dem Hals, wobei diese drei Teile im einzelnen aus unterschiedlichen Glassorten bestehen. So wird im allgemeinen der Schirm beziehungsweise das wannenförmige Vorderteil der Bildröhre aus einer speziell entwickelten Glassorte hergestellt, die eine hohe mechanische Festigkeit aufweisen muß, keine Blasen aufweisen darf, weil diese das auf den Leuchtschirm geschriebene Bild sehr stark stören würden, und dazu in der Lage sein muß, die beim Auftreten der Elektronenstrahlen entstehende weiche Röntgenstrahlung zu absorbieren und sicher vom Betrachter fernzuhalten. Hierfür eignen sich bleihaltige Glassorten nicht, da sie sich unter Elektronenstrahlbeschuß braun verfärben. Der Schirm besteht daher im allgemeinen aus einem bariumhaltigen Glas. Der Trichter wird im allgemeinen aus einem bleihaltigen Glas gefertigt, während der Hals aus einem Glas hergestellt wird, welches eine gute Durchführung der Metallteile ermöglicht. Die Bildröhren enthalten auf der Innenseite des Schirms einen Leuchtstoff, wobei im Fall von Farbbildröhren Leuchtstoffe in den drei notwendigen Farben vorhanden sind, die in Kombination mit einer in dem Schirmbereich angeordneten Lochmaske die Erzeugung eines farbigen Bildes ermöglichen.

Es ist nun bereits bekannt, daß man solche Bildröhren mit Hilfe einer Schredder-Anlage zerkleinern, die Metallteile abtrennen, die Leuchtstoffe ausspülen und die zerkleinerten Glasrückstände auf Deponien ablagern kann.

Weil damit zu rechnen ist, daß in der Bundesrepublik Deutschland jährlich annähernd 5 Millionen Bildröhren aus Fernsehgeräten und Computermonitoren ausgemustert und verschrottet werden, besteht ein starkes Bedürfnis dafür, die wertvollen Anteile dieser Blldröhren zurückzugewinnen, namentlich das Glas.

Um nun eine optimale und hochwertige Verwertung zu erreichen, ist es erforderlich, daß man sortenreine Glasmaterialien erhält, was nur dadurch bewerkstelligt werden kann, daß die Bildröhren derart zerlegt werden, daß keine Vermischung der Glasmaterialien, namentlich des Glases des Schirmes mit dem des Trichters erfolgt.

Das Abtrennen des Halses ist relativ einfach. Nach dem Belüften der Bildröhre und dem Entfernen der im Hals befindlichen Metallteile kann der Hals durch mechanisches Abschlagen, Abschmelzen, Einsägen und Abbrechen oder durch Absprengen entfernt werden. Wegen des geringen Glasanteils des Halses ist hier einem wirtschaftlichen Trennvorgang der Vorzug zu geben.

Wesentlicher ist die Trennung von Schirm und Trichter, da diese beiden Teile der Bildröhre den überwiegenden Glasanteil umfassen.

Es ist bereits versucht worden, das Trichtermaterial mit einem Resonanzstab oder mit einem hammerähnlichen Gerät von dem Schirm abzuschlagen. Dies ermöglicht aber häufig keine saubere Trennung der verschiedenen Glassorten dadurch, daß die Bildröhren häufig in unerwünschter Weise zerspringen und auseinander fallen.

Eine weitere Möglichkeit besteht darin, den Trichter durch Absprengen von dem Schirm zu trennen. Dies kann mit Hilfe eines elektrisch beheizten Flachdrahtes oder Runddrahtes, durch Aufspritzen eines Materials, das entzündet wird und mit großer Hitzeentwicklung verbrennt, durch Aufbringen eines mit einer geeigneten brennbaren Flüssigkeit getränkten Dochtes und Zünden des Dochtes sowie durch Erhitzen mit einem Ringbrenner, der mit einem Gas/Sauerstoffgemlsch betrieben wird, erfolgen. Diese Methoden sind nicht nur aufwendig, sondern führen häufig nicht zu einer glatten Trennung von Trlchter und Schirm, da das Glasmaterial aufgrund der großen Dicke erhebliche Spannungen aufweist, die häufig zu einem Bruch der Bildröhre führen und damit eine reproduzierbare Trennung der Glasmaterialien verhindern.

Eine weitere Möglichkeit besteht darin, Trichter und Schirm der Bildröhre durch Schneiden mit einer Diamantsäge zu trennen. wobei mit Vorteil mit zwei Sägen gleichzeitig von beiden Seiten die Verbindungsstelle von Trichter und Schirm durchtrennt wird. Auch diese Methode ist aufwendig und kostspielig und vermag daher ebenfalls nicht zu befriedigen.

Aus der DE-A-37 26 795 ist ein Verfahren zum Öffnen einer evakuierten Elektronenröhre mit einer gegenüber Verunreinigungen sehr empfindlichen Elektrode, insbesondere der Photokathode einer Bildverstärkerröhre, bekannt, welches darin besteht, die Lötnaht der evakuierten Elektronenröhre in einer evakuierten Kammer zumindest bis zur Erweichungstemperatur des Lotes zu erhitzen und dann durch einen mechanischen Impuls eine Öffnung des Lötspaltes zu bewirken. Dabei kann die Röhre in der Vakuumkammer derart gelagert sein, daß die beiden die Lötnaht bildenden Röhrenteile unter Einwirkung des mechanischen Impulses und der Schwerkraft sich um eine vorgegebene Strecke voneinander entfernen, so daß der freihängende Teil der Vakuumhülle der Röhre auf die in geringerem Abstand darunter angeordnete Auflage fällt. Bei den in Rede stehenden Elektronenröhren handelt es sich um spezielle Bildverstärkerröhren mit einer Photokathode und einem Leuchtschirm sowie gegebenenfalls noch einen Vierkanal-Sekundärelektronenverstärker, bei denen ein erhebliches Bedürfnis dafür besteht, die kompliziert aufgebauten oder auch die fehlerhaften Elektroden unzerstört wiederzugewinnen. Diese Elektronenröhren besitzen eine ringförmige oder scheibenförmige, die Vakuumhüllenteile verbindende Lötnaht aus Indium, das heißt also einem metallischen Lot, welches bei 157°C schmilzt und damit bei wesentlich niedrigeren Temperaturen als die üblicherweise bei der Herstellung von Kathodenstrahlröhren verwendeten Glaslote.

Aus Patent Abstracts of Japan, Vol. 9, No. 123 (1985) (JP-A-60 10 545) ist es bereits bekannt, daß man Bildröhren dadurch wiedergewinnen kann, daß man die Bildröhre in Salpetersäure eintaucht, um den Glaslotbereich an der Verbindungsstelle von Schirm und Trichter zu lösen und zu entfernen, worauf dann diese beiden Teile durch Besprühren mit heißem Wasser getrennt werden können.

Schließlich beschreibt die US-A-4 176 891 ein Verfahren zur Wiederaufarbeitung von Bildröhren, welches ebenfalls darin besteht, den äußeren Bereich des Glaslotes anzuätzen und anschließend die Bildröhre durch Anwendung eines thermischen Schocks an der Verbindungsstelle zu sprengen.

Das zuletzt genannte Verfahren vermag insbesondere wegen der Anwendung von Säuren nicht zu befriedigen, da die Säuren aufgefangen und wiederbenutzt werden müssen.

Es hat sich weiterhin gezeigt, daß das Glas von Bildröhren, namentlich von Fernsehbildröhren im Laufe der Benutzung unter der Einwirkung des Kathodenstrahls und der auftretenden unterschiedlichen Temperaturen Spannungen entwickelt und spröder wird, so daß die Gläser bei der Einwirkung mechanischer Kräfte sehr gerne in unerwünschter Weise zerspringen und lange Risse bilden, so daß sich ungleichmäßige Glasbruchstücke ergeben, deren Weiterbehandlung nicht nur schwierig, sondern auch für das handhabende Personal wegen der scharfen Bruchkanten gefährlich ist.

Die Aufgabe der vorliegenden Erfindung besteht nun darin, ein Verfahren zur Wiederaufbereitung von Blldröhren anzugeben, welches in einfacher Weise eine saubere und glatte Trennung der Glasmaterialien und Trichter und Schirm der Bildröhren ermöglicht, so daß es dann ohne Gefährdung des Personals möglich wird, die weitere Aufarbeitung der übrigen Bestandteile der Bildröhren durchzuführen, wie die Trennung der Elektroden, der Lochmaske und insbesondere das Abspülen und Wiedergewinnen der Leuchtstoffe.

Da diese Verfahren zur Wiedergewinnung der Einzelbestandteile der Bildröhre namentlich wegen der Anwendung von Säuren nicht zu befriedigen vermögen, besteht die Aufgabe der vorliegenden Erfindung nun darin, ein Verfahren zur Wiederaufbereitung von Bildröhren anzugeben, welches in einfacher Weise eine saubere Trennung der Glasmaterialien von Trichter und Schirm der Bildröhren ermöglicht.

Es hat sich gezeigt, daß diese Aufgabe dadurch gelöst werden kann, daß durch langsames Erhitzen der belüfteten Bildröhre auf mindestens die Erweichungstemperatur des Glaslotes an der Verbindungsstelle zwischen Trichter und Schirm und Verschieben von Trichter und Schirm unter Einfluß der Schwerkraft eine glatte Trennung von Trichter und Schirm bewirkt wird, wenn die Verbindungsstelle von Schirm und Trichter gegenüber der Horizontalen geneigt ist.

Gegenstand der Erfindung ist daher das Verfahren gemäß Anspruch 1. Die Unteransprüche betreffen bevorzugte Ausführungsformen dieses Erfindungsgegenstandes.

Das erfindungsgemäße Verfahren besteht darin, daß man zunächst die Bildröhre belüftet, beispielsweise durch Einbohren eines Loches oder durch Entfernen des Halses, und anschließend eine glatte Trennung von Schirm und Trichter durch langsames Erhitzen der belüfteten Bildröhre bewirkt wird, die beim Erhitzen derart angeordnet ist, daß die Verbindungsstelle von Schirm und Trichter gegenüber der Horizontalen geneigt ist, so daß die Trennung durch Verschieben von Schirm und Trichter gegeneinander erreicht wird.

Mit Vorteil erfolgt das Erhitzen auf eine Temperatur, die bei oder oberhalb der Erweichungstemperatur des Glaslotes, jedoch unterhalb der Erweichungstemperatur des Glases von Schirm beziehungsweise Trlchter liegt.

Gemäß einer bevorzugten Ausführungsform der Erfindung wird die Bildröhre zunächst während einer bestimmten Aufheizzeit auf eine bestimmte Temperatur erhitzt, dann während einer bestimmten Haltezeit bei dieser Temperatur gehalten und schließlich innerhalb einer bestimmten Zeitdauer auf eine Temperatur von weniger als 120°C abgekühlt. Hierdurch wird eine Temperung des Glasmaterials der Bildröhre erreicht, welche zur Folge hat, daß nicht nur eine glattere Trennung von Bildröhre und Trlchter möglich wird, sondern die vorhandenen Spannungen aus dem zum Teil recht dicken Glas beseitigt werden, so daß die unerwünschte Bildung von Rissen und Sprüngen bei diesem Wiederaufbereitungsvorgang beziehungsweise der anschließenden Weiterbehandlung der sauber getrennten Glasbestandteile der Bildröhre vermieden wird.

Gemäß einer bevorzugten Ausführungsform der Erfindung erfolgt daher das Erhitzen auf die Erweichungstemperatur von 530 bis 580°C, vorzugsweise 550 bis 570°C mit einer Aufheizzeit von 60 bis 300 Minuten, vorzugsweise von 120 bis 210 Minuten.

Nach Durchlaufen dieser Aufheizzeit und Erreichen der angegebenen Temperatur wird die Bildröhre während einer Haltezeit von 30 bis 60 Minuten, vorzugsweise 40 bis 45 Minuten bei der erreichten Temperatur gehalten. Mit Vorteil liegt die während der Haltezeit eingehaltene Temperatur im Bereich von 530 bis 580°C, bevorzugter im Bereich von 560 bis 570°C.

Nach Ablauf der Haltezeit wird die Bildröhre im Verlauf von 1 bis 6 Stunden, vorzugsweise von 3 bis 5 Stunden auf eine Temperatur von weniger als 120°C abgekühlt.

Überraschenderweise hat sich erwiesen, daß es möglich ist, das Verschieben von Schirm und Trichter der Bildröhre unter dem Einfluß der Schwerkraft allein und ohne die Anwendung von mechanischen Impulsen zu bewirken, nämlich dadurch, daß die Bildröhre beim Erhitzen derart angeordnet ist. daß die Ebene der Verbindungsstelle von Schirm und Trichter gegenüber der Horizontalen geneigt ist. Beim Erhitzen der Bildröhre auf eine Temperatur bei oder oberhalb der Erweichungstemperatur des Glaslotes gleitet der obere Teil der Bildröhre unter Einwirkung der Schwerkraft auf der in der Regel planen und geraden Verbindungsstelle ab, so daß sich Trichter und Schirm ohne weiteres und glatt voneinander lösen lassen.

Dies ist nicht zu erwarten gewesen, weil die Verbindungsflächen von Schirm und Trichter normalerweise poliert oder geläppt sind, um eine glatte Glaslötfläche zu ergeben, auf die dann das Glaslot aufgetragen wird, wonach die fertig bestückten Bestandteile der Bildröhre, nämlich Schirm einerseits und Trichter andererseits bei einer Temperatur von etwa 400°C derart zusammengefügt werden, daß die notwendige Justage namentlich der in dem Halsrohrvorliegenden Elektroden und dem Schirm beziehungsweise der Lochmaske erreicht wird. Das Glaslot, bei dem es sich in der Regel um eine Mischung aus mehreren Metalloxiden und Glasbildnern handelt, besitzt in der Regel einen niedrigeren Schmelzpunkt als die zu verbindenden Gläser und verbindet in diesem Falle Schirm und Trichter fest miteinander, wobei aufgrund der polierten beziehungsweise geläppten Verbindungsoberflächen von Trichter beziehungsweise Schirm nur eine sehr dünne Glaslotschicht vorliegt. Da nun beim Erhitzen flüchtige Bestandteile des Glaslotes verdampfen und eine feste Verbindung der Glaslotbestandteile mit den Glasmaterialien des Schirms beziehungsweise des Trichters erfolgt, ist es zweifellos als überraschend anzusehen, daß durch Erhitzen der Bildröhre auf eine Temperatur oberhalb des Erweichungspunktes des Glaslotes ein Verschieben von Schirm und Trichter gegeneinander in der Ebene der Verbindungsstelle möglich wird.

Gemäß einer bevorzugten Ausführungsform der Erfindung wird die Bildröhre geneigt mit der Schirmseite nach unten in einer Halterung angeordnet und in der Welse durch die Wärmekammer geführt, daß Temperatur und Dauer des Erhitzens derart bemessen sind, daß die oben angesprochenen Aufheizzeiten, Haltezeiten und Abkühlzeiten erreicht werden, so daß nach dem Wiederaustreten der vorzugsweise kontinuierlich durch die Wärmekammer geführten Halterung eine glatte Trennung von Schirm und Trlchter der Bildröhre erreicht wird, indem die von dem unten liegenden Schirm abgeglittenen Trlchter in einer entsprechenden Halterung aufgefangen werden, so daß eine saubere Trennung der Glasmaterialien von Schirm und Trlchter der Bildröhre erreicht wird.

Bei dem erfindungsgemäßen Verfahren kann der Hals der Bildröhre während des Belüftens oder danach entfernt werden.

Das erfindungsgemäße Verfahren besitzt den weiteren Vorteil, daß beim Hindurchführen der Bildröhre durch die Wärmekammer unter Einhaltung der oben angegebenen Aufheizzeiten, Haltezeiten und Abkühlzeiten bei den definierten Temperaturen das Glasmaterial getempert wird und seine Spannungen und seine Sprödigkeit verliert, so daß es nicht zur Ausbildung von willkürlichen Rissen neigt, was eine glatte Trennung von Schirm und Trichter ermöglicht. In dieser Weise wird die anschließende Recyclisierung der Einzelbestandteile der Bildröhre, nämlich der Metallmaterialien, des Leuchtstoffes und der unterschiedlichen Glasmaterialien von Schirm und Trichter in einfacher und ungefährlicher Weise möglich. letzteres deswegen, weil die Trennung von Schirm und Trichter an der Verbindungsstelle erfolgt und keine scharfkantigen Glasbruchstellen erzeugt werden.

Bei der Durchführung des erfindungsgemäßen Verfahrens erfolgt die Temperaturführung vorzugsweise nach dem oben angegebenen Programm, bis die Schmelztemperatur des Glaslotes erreicht beziehungsweise leicht überschritten wird. Nach erfolgter Trennung durch Verschieben der beiden Bauteile, nämlich Schirm und Trichter, das ausschließlich unter Einfluß der Schwerkraft erfolgt, kann das getrennte Glasmaterial abgekühlt werden. Die Wärme kammer wird vorzugsweise unter Normaldruck betrieben.

Mit Vorteil besteht die erfindungsgemäß eingesetzte Wärmekammer aus sogenannten Leichtbausteinen, die einen sehr geringen Wärmeinhalt haben und sehr gut isolieren, so daß die Energieverluste gering sind. Weiterhin ist es von Vorteil, die Atmosphäre der Wärmekammer in den Kreislauf zu führen und gegebenenfalls zu filtern, um ein Austreten unerwünschter Materiallen in die Atmosphäre zu vermeiden.

## Patentansprüche

1. Verfahren zur Wiederaufarbeitung von Bildröhren durch Erhitzen der Bildröhre auf mindestens die Erweichungstemperatur des Lotes an der Verbindungsstelle und Trennung von Schirm und Trichter unter Einfluß der Schwerkraft, **dadurch gekennzeichnet**, daß eine glatte Trennung von Schirm und Trichter durch langsames Erhitzen der belüfteten Bildröhre, die beim Erhitzen derart angeordnet ist, daß die Verbindungsstelle von Schirm und Trichter gegenüber der Horizontalen geneigt ist, und Verschieben von Schirm und Trichter gegeneinander bewirkt wird.

2. Verfahren nach Anspruch 1, **dadurch gekennzeichnet**, daß das Erhitzen auf eine Temperatur erfolgt, die bei oder oberhalb der Erweichungstemperatur des Glaslotes jedoch unterhalb der Erweichungstemperatur des Glases von Schirm bzw. Trichter liegt.

3. Verfahren nach Anspruch 2, **dadurch gekennzeichnet**, daß das Erhitzen auf die Erweichungstemperatur mit einer Aufheizzeit von von 60 bis 300 Minuten, vorzugsweise von 120 bis 210 Minuten erfolgt.

4. Verfahren nach Anspruch 3, **dadurch gekennzeichnet**, daß die Bildröhre im Verlauf der Aufheizzeit auf eine Temperatur von 530°C bis 580°C. vorzugsweise 550°C bis 570°C erhitzt wird.

5. Verfahren nach Anspruch 2 oder 3, **dadurch gekennzeichnet**, daß sich an die Aufheizzeit eine Haltezeit bei der erreichten Temperatur von 30 bis 60 Minuten, vorzugsweise von 40 bis 45 Minuten anschließt.

6. Verfahren nach Anspruch 5, **dadurch gekennzeichnet**, daß die während der Haltezeit eingehaltene Temperatur im Bereich von 530°C bis 580°C, vorzugsweise 560°C bis 570°C liegt.

7. Verfahren nach mindestens einem der vorhergehenden Ansprüche, **dadurch gekennzeichnet**, daß die Bildröhre nach Ablauf der Haltezeit im Verlauf von mindestens 3 Stunden, vorzugsweise mindestens 4 Stunden auf eine Temperatur von weniger als 120°C abgekühlt wird.

8. Verfahren nach mindestens einem der vorhergehenden Ansprüche, **dadurch gekennzeichnet**, daß die Bildröhre geneigt, mit der Schirmseite nach unten in einer Halterung angeordnet durch eine Wärmekammer geführt wird.

9. Verfahren nach mindestens einem der vorhergehenden Ansprüche, **dadurch gekennzeichnet**, daß der Hals der Bildröhre während des Belüftens oder danach entfernt wird.

## Claims

1. A method of reprocessing picture tubes by heating the picture tube to at least the fusing temperature of the solder at the joint and separating the screen and the cone under the influence of gravity, **characterized in that** a clean separation of the screen and the cone is effected by slowly heating the aerated picture tube which is arranged, during heating, in such a way that the joint between the screen and the cone is inclined with respect to the horizontal, and displacing the screen and the cone in opposite directions.

2. The method as claimed in claim 1, **characterized in that** the heating is carried out to a temperature at or above the fusing temperature of the glass solder but below the fusing temperature of the glass of the screen and of the cone, respectively.

3. The method as claimed in claim 2, **characterized in that** the heating to the fusing temperature is carried out with a heating-up time of 60 to 300 minutes, preferably 120 to 210 minutes.

4. The method as claimed in claim 3, **characterized in that** in the course of the heating-up time, the picture tube is heated to a temperature of from 530°C to 580°C, preferably 550°C to 570°C.

5. The method as claimed in claim 2 or 3, **characterized in that** the heating-up time is followed by a holding time of 30 to 60 minutes, preferably 40 to 45 minutes, at the temperature attained.

6. The method as claimed in claim 5, **characterized in that**the temperature adhered to during the holding time is in the range of from 530°C to 580°C, preferably 560°C to 570°C.

7. The method as claimed in at least one of the preceding claims, **characterized in that** at the end of the holding time the picture tube is cooled to a temperature below 120°C in the course of at least three hours, preferably at least four hours.

8. The method as claimed in at least one of the preceding claims, **characterized in that** the picture tube is disposed, in inclined position, with the side of the screen facing downwards, in a holding device, and led through a heating chamber.

9. The method as claimed in at least one of the preceding claims, **characterized in that** the neck of the picture tube is removed during aeration, or thereafter.

## Revendications

1. Procédé de récupération de tubes à rayons cathodiques par chauffage du tube a rayons cathodiques au moins jusqu'à la température de ramollissement de la soudure située à l'interface, et séparation de l'écran du cône sous l'action de la gravité, caractérisé en ce qu'une séparation nette entre l'écran et le cône est réalisée grâce à un chauffage lent du tube à rayons cathodiques aéré qui, lors du chauffage, est disposé de manière telle que l'interface entre l'écran et le cône soit inclinée par rapport à l'horizontale, et grâce au déplacement de l'écran par rapport au cône.

2. Procédé selon la revendication 1, caractérisé en ce que le chauffage est effectué jusqu'à une température qui se situe au niveau de ou au-dessus de la température de ramollissement du verre de soudure, tout en restant en dessous de la température de ramollissement du verre de l'écran ou du cône.

3. Procédé selon la revendication 2, caractérisé en ce que le chauffage jusqu'a la température de ramollissement est effectué pendant une période de chauffage de 60 à 300 minutes, de préférence pendant une période de 120 à 210 minutes.

4. Procédé selon la revendication 3, caractérisé en ce que le tube à rayons cathodiques est porté, au cours de la période de chauffage, à une température de 530°C à 580°C, de préférence à une température de 550°C à 570°C.

5. Procédé selon la revendication 2 ou 3, caractérisé en ce que la période de chauffage est suivie d'une période de maintien à la température atteinte, d'une durée de 30 à 60 minutes, de préférence de 40 à 45 minutes.

6. Procédé selon la revendication 5, caractérisé en ce que la température maintenue pendant la période de maintien se situe dans une plage de 530°C à 580°C, de préférence dans une plage de 560°C à 570°C.

7. Procédé selon l'une au moins des revendications précédentes, caractérisé en ce que le tube à rayons cathodiques est refroidi, à expiration de la période de maintien, à une température de moins de 120°C, dans un délai d'au moins 3 heures, de préférence dans un délai d'au moins 4 heures.

8. Procédé selon l'une au moins des revendications précédentes, caractérisé en ce que le tube à rayons cathodiques est guidé à travers une chambre de réchauffage en étant disposé de façon inclinée sur un support, le côté écran étant dirigé vers le bas.

9. Procédé selon l'une au moins des revendications précédentes, caractérisé en ce que le col du tube à rayons cathodiques est enlevé lors de l'aération ou après celle-ci.
